Europäisches Patentamt

European Patent Office

Office européen des brevets

(19)

(11) Numéro de publication: **0 008 979**
**B1**

(12) **FASCICULE DE BREVET EUROPEEN**

(45) Date de publication du fascicule de brevet: **15.04.81**

(51) Int. Cl.³: **G 02 B 5/14**

(21) Numéro de dépôt: **79400591.8**

(22) Date de dépôt: **28.08.79**

(54) Connecteur optique pour carte de circuit imprimé.

(30) Priorité: **01.09.78 FR 7825289**

(43) Date de publication de la demande:
**19.03.80 Bulletin 80/6**

(45) Mention de la délivrance du brevet:
**15.04.81 Bulletin 81/15**

(84) Etats Contractants Désignés:
**BE DE GB IT NL SE**

(56) Documents cités:
**FR - A - 2 102 647**

(73) Titulaire: **THOMSON-CSF**
**173, Boulevard Haussmann**
**F-75360 Paris Cedex 08 (FR)**

(72) Inventeur: **d'Auria, Luigi**
**"Thomson-CSF" - SCPI 173, bld Haussmann**
**75360 Paris Cedex 08 (FR)**
Inventeur: **Maillot, Philippe**
**"Thomson-CSF" - SCPI 173, bld Haussmann**
**75360 Paris Cedex 08 (FR)**

(74) Mandataire: **Desperrier, Jean-Louis et al,**
**"Thomson-CSF" - SCPI 173, Bld Haussmann**
**F-75360 Paris Cedex 08 (FR)**

Courier Press, Leamington Spa, England.

## Connecteur optique pour carte de circuit imprimé

La présente invention se rapporte aux connecteurs optiques pour carte de circuit imprimé qui permettent de relier une telle carte à un câble de liaison par fibre optique.

Il est connu de placer les cartes de circuits imprimés dans des coffrets métalliques connus sous le nom de "paniers". On enfiche ces cartes selon leur tranche par la face avant ouverte d'un tel panier. Elles sont alors guidées et maintenues par des rails fixés sur les parois latérales du panier et vont s'enficher sur des connecteurs électriques multicontacts fixés sur la face arrière de celui-ci.

On sait par ailleurs, réaliser des connecteurs destinés à relier ensemble deux câbles optiques. Des connecteurs de ce type ont été décrits notamment dans le brevet français n° 2 305 747 déposé par la demanderesse le 28 mars 1975 sous le titre "Dispositif de connexion détachable pour liaisons opto-électriques par faisceaux de fibres optiques".

Il est souhaitable d'utiliser les avantages de fort débit sous un faible volume et d'immunité aux parasites des liaisons optiques dans les appareillages comportant des cartes de circuits imprimés, tant pour relier ces cartes entre elles que pour les connecter à des câbles optiques auxquels sont raccordés ces appareillages.

Pour cela, l'invention propose de placer au fond du panier simultanément avec les connecteurs électriques multicontacts usuels au moins un connecteur optique muni de moyens propres à assurer l'établissement correct de la liaison optique, sans autre intervention que le simple enfichage de la carte dans le panier. Ces buti sont atteints par l'objet défini par la revendication 1.

D'autres particularités et avantages de l'invention apparaitront clairement dans la description suivante, présentée, à titre d'exemple non limitatif et faite en regard des figures annexées suivantes:

— la figure 1 représente une vue en coupe verticale d'une embase pour carte de circuit imprimé;

— la figure 2 représente une vue en coupe horizontale de cette même embase;

— la figure 3 représente une vue en coupe d'un connecteur de fond de panier.

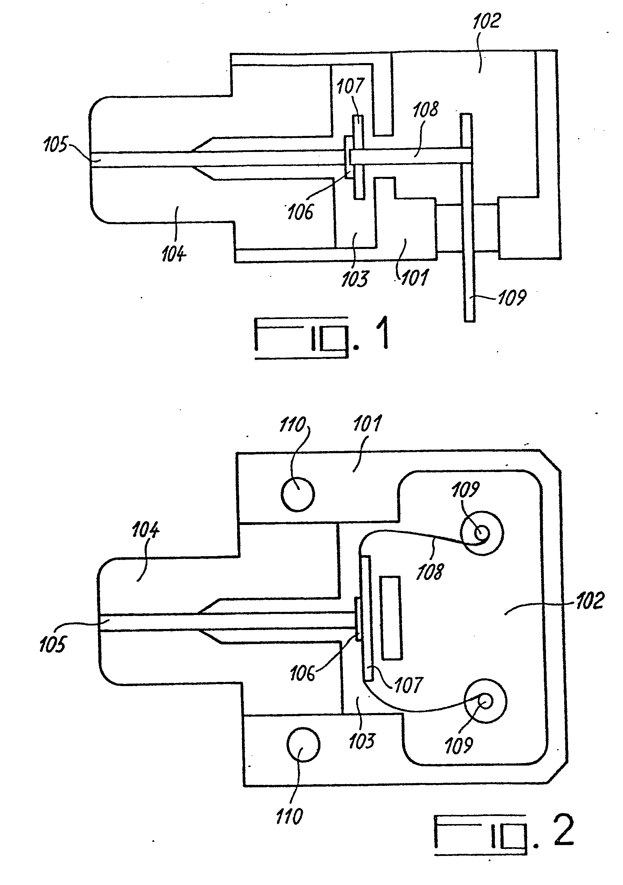

L'embase émettrice ou réceptrice représentée sur les figures 1 et 2 comporte un corps 101 creusé d'une cavité cylindrique 103 et d'une cavité rectangulaire 102 communiquant par deux trous.

Dans la cavité 103 vient s'insérer un embout cylindrique 104 dans lequel est fixée, par collage, une fibre optique 105 dont une extrémité affleure l'extrémité libre de l'embout. Une diode photo-émissive ou photo-réceptrice 106 est appliquée contre l'autre extrémité de cette fibre par l'intermédiaire d'un film de silicone que améliore le couplage optique. Cette diode est fixée sur une plaquette de céramique 107 à laquelle sont fixées deux connexions souples 108 reliées à la diode. Une goutte de colle non représentée immobilise la diode par rapport à la fibre. Les connexions 108 pénètrent dans la cavité 102 par les trous la reliant à la cavité 103 et sont connectées à deux traversées isolantes 109 qui permettent de relier la diode au circuit extérieur d'utilisation tracé sur la carte de circuit imprimé. La cavité 102 est remplie d'un produit d'enrobage lors du montage final.

L'embase est fixée sur cette carte par deux vis qui traversent les trous de fixation 110, de telle manière que l'embout 104 déborde l'extrémité arrière de la carte.

A titre d'exemple, on a utilisé pour une embase émettrice une fibre optique de 370 microns de diamètre et une diode électroluminescente comportant une zone active d'un diamètre de 200 microns. Pour optimiser le couplage entre cette diode et cette fibre on fait émettre la diode lors du montage et on la déplace jusqu'à obtenir un maximum de lumière en sortie de la fibre. On dépose alors la goutte de colle qui les maintiendra assemblées dans la position ainsi déterminée.

De même pour une embase réceptrice, on a utilisé une fibre de 590 microns de diamètre et une photodiode comportant une zone active de 870 microns de diamètre. Dans ces conditions, il n'est pas nécessaire de procéder à une optimisation du coulage comme dans le cas de l'embase émettrice.

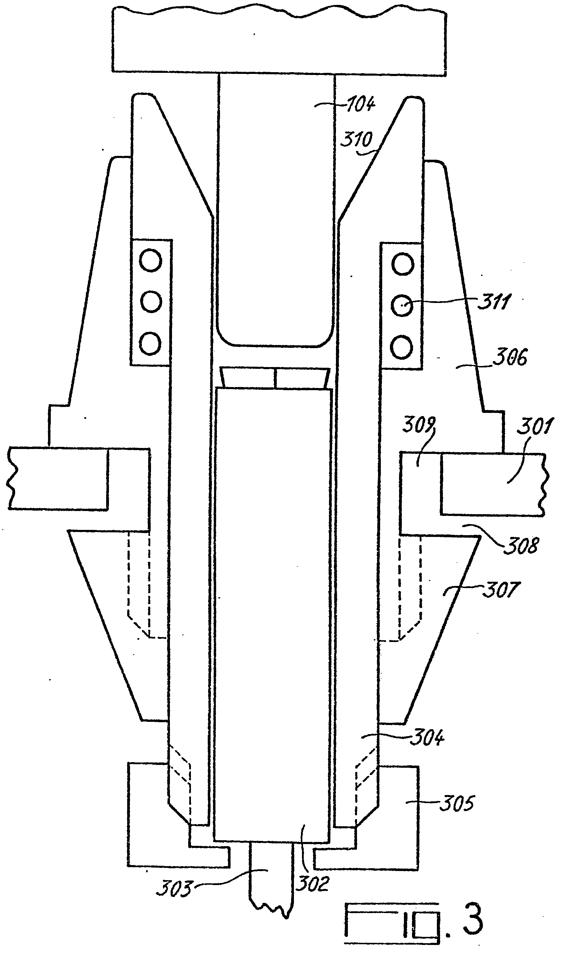

Lorsque l'on enfiche la carte dans un panier l'embout 104 vient pénétrer comme on l'a représenté en figure 3 dans un connecteur fixé au fond 301 de ce panier. En fin de course l'embout 104 est pressé contre l'extrémité d'un embout de câble 302 lequel est fixé à l'extrémité du câble optique 303 et qui permet de maintenir cette extrémité centrée selon son axe. Cet embout 302 est par exemple du type décrit dans la demande de brevet français n° 77 15 304 déposée par la demanderesse le 18 mai 1977 sous le titre "Embout de positionnement pour fibres optiques" et publié sous le mumiro 2 391 480. Il est cylindrique et de même diamètre que l'embout 104. Ces embouts s'emboitent à frottement doux dans l'alésage circulaire du corps 304 du connecteur de fond de panier, et comme les fibres optiques maintenues par l'un et l'autre sont axiales, elles se trouvent ainsi alignées l'une par rapport à l'autre. Sur la figure, on a représenté un jeu entre les embouts et le corps 304 pour bien distinguer ces trois pièces, mais, dans la réalisation ce jeu n'existe pas.

Une bague de retenue 305 vissée sur le corps 304 permet d'empêcher l'embout 302 de s'échapper par l'arrière sous la traction du câble 303. Si ce câble était suffisamment long pour permettre à l'embout de s'échapper par l'avant on empêcherait cela en enfilant, par exemple, un anneau en caoutchouc sur le câble 303 derrière la bague 305.

Les tolérances sur le dimensionnement des cartes et des organes de guidage de celles-ci dans les paniers sont grandes et le jeu latéral à l'emboitement peut atteindre des valeurs de l'ordre du millimètre. Pour obtenir un bon couplage entre les fibres placées dans les embouts 104 et 302, l'erreur d'alignement ne doit pas dépasser une valeur de l'ordre de la dizaine de microns. Typiquement, pour un câble de liaison 303 comportant une monofibre d'un diamètre de 200 microns et une embase émettrice ou réceptrice conforme aux exemples décrits plus haut, on limite les pertes à 0,1 db en respectant une tolérance d'alignement de plus ou moins dix microns.

Cette précision est obtenue en prévoyant comme décrit plus haut, un frottement doux entre les embouts 104 et 302 et le corps 304. Un tel ajustage ne permet pas d'obtenir le jeu latéral qui est nécessaire pour compenser le jeu entre la carte et le panier.

Pour obtenir ce jue latéral, le corps 304 est inséré dans un fourreau formé de deux pièces 306 et 307 qui se vissent l'une sur l'autre; la pièce 306 formant vis et la pièce 307 formant écrou. Pour fixer le connecteur auf fond du panier 301 on insère la pièce 306 dans un trou foré dans ce fond, par un côté de celui-ci, et on visse la pièce 307 sur la pièce 306 de l'autre côté. Le filetage de la pièce 307 ne débouche que d'un seul côté et ainsi lorsqu'elle est vissée à fond sur la pièce 306, ces deux pièces délimitent entre elles une gorge circulaire que enserre les abords du trou foré dans le fond du panier. Les dimensions des pièces sont telles que lorsqu'elles sont vissées à fond l'une sur l'autre, il subsiste un léger jeu longitudinal 308 représenté sur la figure d'une mainère très exagérée pour la clarté du dessin et un grand jeu latéral 309 que permettent tous deux au fourreau de se déplacer latéralement en tous sens dans le trou de fixation sans déplacement axial sensible.

L'alésage du corps 304 présente du côté où pénètre l'embout 104 de l'embase de la carte, un évasement 310 de forme conique dont l'ouverture supérieure présente un diamètre supérieur à la somme du diamètre du trou de fixation et du jeu latéral 309. Ainsi, lorsque l'embout 104 se présente en face de cette ouverture supérieure, il ne peut pas buter contre l'extrémité du corps 304 et pénètre nécessairement dans l'évasement 310. Sous l'action de l'embout contre les parois de l'évasement l'ensemble du connecteur coulisse latéralement et vient se centrer automatiquement sur l'embout jusqu'à ce que celui-ci pénètre dans la partie cylindrique de l'alésage du corps.

A l'encontre d'un connecteur électrique pour lequel l'enfoncement plus ou moins grand des contacts est sans importance, il faut impérativement établir puis maintenir le contact entre les extrémités des fibres optiques de l'embase et du connecteur.

Pour cela, on fait saillir le corps 304 du connecteur en dehors du fourreau constitué par les pièces 306 et 307 sous l'action d'un ressort 311 qui est placé dans un logement ménagé entre le corps et le fourreau et qui prend appui sur deux épaulements délimitant ce logement vers le haut pour le corps et vers le bas pour le fourreau.

La bague 305 de retenue de l'embout de câble 302 sert également à retenir le corps 304 en butant contre la pièce 307 pour éviter qu'il ne s'échappe vers l'avant sous l'action du ressort.

Dans sa position extrême lorsque la connexion n'est pas établie, le corps 304 place l'extrémité de l'embout de câble 302 au delà de la position limite de l'embout de carte 104, compte tenu de toutes les tolérances admises. Ainsi, lorsque l'on insère la carte dans le panier l'embout 104 repoussera toujours l'embout 302 d'une distance plus ou moins grande selon le cas mais suffisante pour augmenter en partie la compression du ressort 311 lequel est déjà maintenu partiellement bandé par la bague 305 qui arrête le mouvement du corps 304 sous l'action du ressort. Pour assurer un bon contact, il faut que la poussée du ressort soit plus grande que le frottement de l'embout de carte 104 dans le corps 304 afin que dans son mouvement cet embout repousse le corps par sa pression sur l'embout de câble 302 et non par sa friction sur le corps luimême. De plus, cette poussée doit permettre le maintien ultérieur du contact des deux embouts en dépit des mouvements de la carte dans le panier sous l'effect des chocs. On sait en effet, que les cartes sont montées relativement libres dans les paniers.

Dans un exemple de réalisation on a utilisé comme matériaux, du delrin pour le corps 304 et du laiton pour l'embout 104 ce qui donne un frottement très doux pour un jeu très faible et permet de limiter la force d'appui due au ressort à une valeur de 200 g, tout en gardant un jeu de faux alignement inférieur aux 100 microns cités plus haut.

Dans le cas de certains montages où la précision de l'assemblage cartes/paniers est supérieure, on peut ramener le jeu latéral au niveau de la liaison corps/fourreau en prévoyant entre ceux-ci un jeu de quelques dizièmes de millimètres et en supprimant les jeux 309 et 308 entre le fourreau et le fond, ceux-ci étant alors fixés rigidement l'un par rapport à l'autre. Une telle réalisation permet notamment, d'intégrer la connection optique dans un connecteur électrique multicontact d'un type standard, et même de fabriquer des connecteurs optiques multivoies.

**Revendications**

1. Connecteur optique pour carte de circuit imprimé, destiné à être fixé sur le fond d'un panier de cartes et comprenant un corps muni d'un alésage destiné à recevoir un premier embout de liaison optique fixé à une carte et un deuxième embout de liaison optique fixé à une extrémité d'un câble de connexion optique, caractérisé en ce qu'il comprend des moyens permettant d'assurer une mobilité latérale d'au moins une partie deu connecteur par rapport au fond du panier pour centrer le corps sur le premier embout, et des moyens permettant de presser l'extrémité du deuxième embout contre l'extrémité du premier embout pour assurer la permanence de la liaison optique entre ces deux embouts.

2. Connecteur selon la revendication 1, caractérisé en ce qu'il comprend un fourreau dans lequel le corps peut coulisser longitudinalement, un ressort permettant de faire saillir le corps vers l'avant du fourreau, et une bague de retenue permettant de limiter le mouvement du corps sous l'action du ressort.

3. Connecteur selon la revendication 2, caractérisé en ce que la bague de retenue permet également de transmettre au deuxième embout la force appliquée par le ressort sur le corps.

4. Connecteur selon l'une quelconque des revendications 2 et 3, caractérisé en ce que le corps peut coulisser à frottement doux dans le fourreau et que celui-ci est composé de deux pièces fixées l'une sur l'autre et délimitant entre elles une gorge destinée à recevoir le fond de panier en présentant avec lui un jeu latéral et un jue longitudinal; le jeu latéral permettant au fond de panier de coulisser librement dans la gorge.

5. Connecteur selon l'une quelconque des revendications 2 et 3, caractérisé en ce que le corps présente par rapport au fourreau un jeu permettant d'assurer ladite mobilité latérale, et que le fourreau est prévu pour être fixé de manière fixe sur le fond du panier.

6. Connecteur selon l'une quelconque des revendications 1 à 5, caractérisé en ce que l'alésage du corps comprend une partie cylindrique permettant de maintenir les embouts face à face, et une partie conique permettant de déplacer le partie mobile du connecteur sous l'action du premier embout sur la paroi de cette partie conique.

## Claims

1. Optical printed circuit card connector adapted to be fixed onto the bottom of a card basket and comprising a body having a bore adapted to receive a first optical junction plug fixed to a card and a second optical junction plug fixed to the end of an optical connection cable, characterized in that it comprises means adapted to allow at least a portion of said connector to be laterally movable with respect to said bottom of the basket for centering said body with respect to said first plug, and means for pressing the end of said second plug against the end of said first plug, so as to provide a permanent optical connection between said two plugs.

2. Connector according to claim 1, characterized in that it comprises a sleeve wherein said body is adapted to slide longitudinally, a spring adapted to cause said body to protrude forwardly from said sleeve, and a stop ring adapted to limit the displacement of said body under the action of the spring.

3. Connector according to claims 2, characterized in that said stop ring is also adapted to transmit to said second plug the force applied to said body by said spring.

4. Connector according to any one of claims 2 and 3, characterized in that said body is adapted to slide with slight friction in said sleeve, and in that the latter is constituted by two elements fixed to each other and delimiting between said elements a groove adapted to receive said bottom of the basket with a lateral clearance and a longitudinal clearance, said bottom of the basket being able to slide freely in said groove, due to said lateral clearance.

5. Connector according to any one of claims 2 and 3, characterized in that said body defines with respect to said sleeve a clearance which ensures the lateral movableness, and in that said sleeve is adapted to be fixedly attached to the bottom of said basket.

6. Connector according to any one of claims 1 to 5, characterized in that the bore of said body comprises a cylindrical portion adapted to maintain said plugs face to face with each other, and a conical portion allowing the movable portion of said connector to be displaced under the action of said first plug on the wall surface of said conical portion.

## Patentansprüche

1. Optischer Verbinder für gedruckte Schaltungskarten, der auf dem Boden eines Kartenkorbs anbringbar ist und einen Körper mit einer Bohrung aufweist, die zur Aufnahme eines ersten, an einer Karte befestigten optischen Verbindungsendsteckers und eines zweiten, an einem Ende eines optischen Verbindungskables befestigten optischen Verbindungsendsteckers bestimmt ist, dadurch gekennzeichnet, dass er Mittel aufweist, die zwecks Zentrierung des Körpers in Bezug auf den ersten Verbindungsendstecker wenigstens für einen Teil des Verbinders dessen Bewegungsfreiheit in seitlicher Richtung in Bezug auf den Korbboden sichern, sowie Mittel zum Andrücken des Endes des zweiten Verbindungsendsteckers an das Ende des ersten Verbindungsendsteckers, um eine dauernde optische Verbindung zwischen den beiden Verbindungsendsteckern herzustellen.

2. Verbinder nach Anspruch 1, dadurch gekennzeichnet, dass er eine Hülse, in welcher der Körper in Längsrichtung gleitbar angeordnet ist, eine den Körper nach vorne aus der Hülse herauszudrücken bestrebte Feder, sowie einen die durch die Feder bewirkte Bewegung des Körpers begrenzenden Anschlagring aufweist.

3. Verbinder nach Anspruch 2, dadurch gekennzeichnet, dass durch den Anschlagring ferner die von der Feder auf den Körper ausgeübte Kraft auf den zweiten Verbindungsendstecker übertragbar ist.

4. Verbinder nach einer der Ansprüche 2 und 3, dadurch gekennzeichnet, dass der Körper in der Hülse mit leichter Reibung gleitbar angeordnet ist, und dass die Hülse aus zwei miteinander fest verbundenen Teilen besteht, zwischen welchen eine Auskehlung gebildet ist, die den Korbboden mit seitlichem Spiel und Längsspiel aufnimmt, derart, dass der Korbboden dank des seitlichen Spiels in der Auskehlung frei gleitbar ist.

5. Verbinder nach einem der Ansprüche 2 und 3, dadurch gekennzeichnet, dass der Körper in Bezug auf die Hülse mit einem Spiel angeordnet ist, welches die seitliche Bewegungsfreiheit sichert, und das die Hülse ortsfest am Boden des Korbes befestigbar ist.

6. Verbinder nach einem der Ansprüche 1 bis 5, dadurch gekennzeichnet, das die Bohrung des Körpers einen die Verbindungsendstecker in einander gegenüberliegender Stellung haltenden zylindrischen Abschnitt, sowie einen kegelförmigen Abschnitt aufweist, der es dem beweglichen Teil des Verbinders gestattet, sich unter der Einwirkung des ersten Verbindungsendsteckers an der Wandung dieses kegelförmigen Abschnitts zu bewegen.

FIG. 1

FIG. 2

FIG. 3